# EUROPÄISCHE PATENTSCHRIFT

(11) **EP 1 487 141 B1**
(45) Veröffentlichungstag und Bekanntmachung des Hinweises auf die Patenterteilung: **18.08.2010**
(21) Anmeldenummer: 04012861.3
(22) Anmeldetag: 01.06.2004
(51) Int. Cl.: H04K 1/00

(54) **Bereitstellen von Teilschlüsseln eines durch visuelle Kryptographie verschlüsselten Wertes**
Preparation of key shares of a value encrypted by visual cryptography
Préparation de portions de clé d'une valeur encryptée par cryptographie visuelle

(30) Priorität: 12.06.2003 DE 10326462
(43) Veröffentlichungstag der Anmeldung: 15.12.2004
(73) Patentinhaber: Deutsche Telekom AG, 53113 Bonn (DE)
(72) Erfinder: Saar, Eva, 64347 Griesheim (DE)

(56) Entgegenhaltungen:
- NAOR M ET AL: "Visual cryptography" ADVANCES IN CRYPTOLOGY. EUROCRYPT, XX, XX, 12. Mai 1994 (1994-05-12), Seiten 1-12, XP002205767
- PATENT ABSTRACTS OF JAPAN Bd. 0181, Nr. 46 (P-1707), 10. März 1994 (1994-03-10) & JP 5 323267 A (TOSHIBA CORP), 7. Dezember 1993 (1993-12-07)
- LI Y ET AL: "SECURITY AND ENCRYPTION OPTICAL SYSTEMS BASED ON A CORRELATOR WITH SIGNIFICANT OUTPUT IMAGES" APPLIED OPTICS, OPTICAL SOCIETY OF AMERICA,WASHINGTON, US, Bd. 39, Nr. 29, 10. Oktober 2000 (2000-10-10), Seiten 5295-5301, XP000981154 ISSN: 0003-6935

## Beschreibung

Die Erfindung betrifft ein Verfahren und eine Vorrichtung zum Bereitstellen von Teilschlüsseln eines durch visuelle Kryptographie verschlüsselten Ereignisses sowie ein Werk mit zumindest einem Abschnitt, welcher zumindest einen Teilschlüssel eines durch visuelle Kryptographie verschlüsselten Ereignisses aufweist, und ein Implementationssoftwareprodukt, welches zur Durchführung des Verfahrens entsprechend ausgebildet ist.

Die visuelle Kryptographie wird seit Längerem zum Verschlüsseln von Ereignissen angewendet. M. Naor und A. Shamir beschreiben in ihrem Beitrag "Visual cryptography" in den Proceedings of the Eurocrypt (1994), auf den Seiten 1 - 12 die Grundlagen der visuellen Kryptographie.

Die visuelle Kryptographie ordnet einem zu verschlüsselnden Ereignis zumindest zwei Teilschlüssel zu, welche im einfachsten Fall als ein schwarz-weiß-Muster festgelegt sind. So kann beispielsweise jeder Bildpunkt der als Ereignis bezeichneten graphischen Darstellung in vier Pixel auf zwei Folien aufgeteilt werden. Die Aufteilung erfolgt dabei zufällig, so dass den einzelnen Folien, welche die Teilschlüssel bilden, jeweils nur ein graphisches Rauschen entnehmbar ist.

Durch Übereinanderlegen in exakter Ausrichtung der beiden Teilschlüssel werden die Abbildungen des graphischen Rauschens beider Teilschlüssel rekombiniert. Dabei entstehen zum einen Pixelgruppen, welche zur Hälfte durchsichtig sind, und zum anderen Pixelgruppen, welche gänzlich schwarz sind. Dies kann sowohl in einer für das Auge sichtbaren Weise als auch insbesondere für jegliche Art rechnergestützte Analyse erfolgen.

Üblicherweise wird die visuelle Kryptographie zum Erzeugen von Teilschlüsseln verwendet, mit welchen ein verschlüsseltes Ereignis rekombiniert werden kann. Dabei hat es sich jedoch als nachteilig herausgestellt, dass zunächst das zu verschlüsselnde Ereignis bekannt sein muss, bevor unter Kenntnis des Ereignisses die Teilschlüssel erzeugt werden können.

Insbesondere bei Fachbüchern tritt jedoch häufig das Problem auf, dass neue Forschungsergebnisse bekannt werden, nachdem das Buch bereits gedruckt und verkauft ist. Eine mögliche Lösung ist, die neuen Ergebnisse im Nachhinein auf separate Blätter zu drucken und sie entweder in die noch zu verkaufenden Bücher einzulegen oder sie öffentlich auszulegen.

Die erste Möglichkeit hat den Nachteil, dass sie nur noch nicht verkaufte Bücher aktualisiert. Die zweite Lösung aktualisiert zwar auch bereits verkaufte Bücher, hat aber den Nachteil, dass nicht nur die Berechtigten, das heißt die Käufer des Buches, die neuen Ergebnisse lesen können. Ein Verschlüsseln der Ergebnisse durch visuelle Kryptographie kam bisher nicht in Betracht, da keine Möglichkeit besteht, die notwendigen Teilschlüssel ohne die Kenntnis des Ereignisses, das heißt im Beispiel der neuen Forschungsergebnisse, zu erzeugen.

Ebenso könnten Mitgliedschaften durch einen Kontrollwert, welcher sichtbar auf einem entsprechenden Ausweis angebracht ist, angezeigt werden. Beispiele für verschiedene Mitgliedschaften sind die Berechtigung zur Nutzung des öffentlichen Nahverkehrs in einem bestimmten Zeitraum oder die Berechtigung zur Nutzung eines Schauspielabonnements sowie eine gültige Immatrikulation.

Im Hinblick auf die Fälschungssicherheit derartiger Ausweise besteht der Bedarf, einen solchen Kontrollwert zu verschlüsseln. Wird dazu auf bekannte Weise visuelle Kryptographie eingesetzt, wird auf den jeweiligen Ausweis ein graphisches Rauschen als erster Teilschlüssel aufgedruckt. Ein Kontrolleur müsste beispielsweise eine Folie zur Verfügung haben, welche den zweiten Teilschlüssel enthält. Durch Rekombination des ersten Teilschlüssels auf dem Ausweis und des zweiten Teilschlüssels auf der Folie des Kontrolleurs kann der Kontrollwert, also das Ereignis, entschlüsselt werden.

Der effizienten Anwendung der visuelle Kryptographie steht dabei jedoch die bereits angesprochene Notwendigkeit im Wege, das Ereignis kennen zu müssen, um die passenden Teilschlüssel zu erzeugen. Das bedeutet, dass bei jeder Änderung der Berechtigung der auf dem Ausweis befindliche Teilschlüssel und damit der Ausweis selbst unbrauchbar wird, ebenso wie die Folie des Kontrolleurs, denn beide verschlüsseln dann ein nicht mehr gültiges Ereignis.

Der Begriff "Ereignis" wird im folgenden synonym zum in den Ansprüchen verwendeten Begriff "Information E" gebraucht.

Aufgabe der Erfindung ist es daher, einen neuen und verbesserten Weg aufzuzeigen, mit welchem die vorstehend aufgezeigten Probleme und Nachteile des Standes der Technik zumindest wesentlich verringert werden können.

Insbesondere ist es eine Aufgabe der Erfindung, eine Möglichkeit zur Verfügung zu stellen, so dass zumindest ein Teilschlüssel eines durch visuelle Kryptographie verschlüsselten Ereignisses flexibel an sich ändernde beziehungsweise neue Ereignisse angepasst werden kann.

Gelöst wird diese Aufgabe auf höchst überraschend einfache Weise bereits durch die Merkmale eines Verfahrens nach Anspruch 1. Ferner ist in Anspruch 18 eine Vorrichtung angegeben, in welcher das Verfahren zum Einsatz kommen kann. Zudem stellt die Erfindung gemäß den Markmalen des Anspruchs 38 ein Werk mit zumindest einem Abschnitt zur Verfügung, welcher einen Teilschlüssel eines durch visuelle Kryptographie verschlüsselten Ereignisses aufweist. Des Weiteren ist in Anspruch 42 ein Implementationssoftwareprodukt angegeben, mit welchem das Verfahren durchgeführt werden kann. Vorteilhafte Weiterbildungen finden sich in den jeweils zugeordneten Unteransprüchen.

Die Erfindung sieht ein Verfahren zum Bereitstellen von Teilschlüsseln (TS_{x,i}, TS_{y,i}) eines durch visuelle Kryptographie verschlüsselten Ereignisses E vor, bei welchem zumindest ein erster Teilschlüssel (TS_{x,i}) erzeugt wird, der zumindest eine erste Teilschlüssel (TS_{x,i}) an zumindest einen ersten Berechtigten vergeben wird, zumindest ein zweiter Teilschlüssel (TS_{y,i}) erzeugt wird, und der zumindest eine zweite Teilschlüssel (TS_{y,i}) an den zumindest einen ersten oder an zumindest einen weiteren Berechtigten vergeben wird, wobei zumindest ein Teilschlüssel (TS_{x,i}, TS_{y,i}) unabhängig von dem zu verschlüsselnden Ereignis E erzeugt wird.

Dadurch, dass zumindest ein Teilschlüssel (TS_{x,i}, TS_{y,i}) unabhängig von dem zu verschlüsselnden Ereignis E erzeugt wird, bietet die Erfindung vorteilhafterweise erstmals die Möglichkeit, das Verfahren zum Bereitstellen von Teilschlüsseln eines durch visuelle Kryptographie verschlüsselten Ereignisses flexibel an sich ändernde und/oder neue Ereignisse anzupassen.

Vor dem Hintergrund der oben beschriebenen Anwendungsmöglichkeiten für ein solches neues Verfahren kann der zumindest eine erste Teilschlüssel insbesondere als graphisches Rauschen auf den Seiten eines Buches oder auf einer Kontrollfolie eines Kontrolleurs abgedruckt sein. Dieser erste Teilschlüssel wird dann an einen ersten Berechtigten, zum Beispiel einen Kunden oder den für den jeweiligen Ausweis vorgesehene Kontrolleur vergeben.

Ein zweiter Teilschlüssel kann insbesondere in Form einer Folie an den Kunden vergeben werden, welcher das Buch mit den Seiten, welche den ersten Teilschlüssel aufweisen, erworben hat. Mit Hilfe der Folie kann der Kunde durch Rekombination mit diesen Seiten ein durch visuelle Kryptographie verschlüsseltes Ereignis entschlüsseln.

Der zweite Teilschlüssel kann aber auch in Form eines als Kontrollwert dienenden Feldes auf einem Ausweis erzeugt werden, welcher an den vorgesehen Inhaber des Ausweise vergeben wird. Durch Rekombination der dem Kontrolleur zur Verfügung stehenden Kontrollfolie mit dem Ausweis kann in diesem Fall ebenfalls ein durch visuelle Kryptographie verschlüsseltes Ereignis rekombiniert werden.

Das erfindungsgemäße Verfahren ist insbesondere deswegen besonders vorteilhaft, weil das Ereignis E, also beispielsweise der Inhalt der zu entschlüsselnden Buchseiten erst nach der Auslieferung des ersten Teilschlüssels mit dem Buch bekannt sein muss. Ebenso können zu einem einmal vorliegenden Teilschlüssel auf einer Kontrollfolie eines Kontrolleurs für Ausweise immer wieder neue Kontrollwerte erzeugt werden, so dass auch entsprechend spät ausgegebene Ausweise mit dem einmal vorliegenden Teilschlüssel rekombiniert werden können.

Im Rahmen des erfindungsgemäßen Verfahrens wird ein Ereignis E definiert. Vorteilhafterweise kann der Zeitpunkt der Definition des Ereignisses E flexibel an die Anforderungen des jeweiligen Anwendungsfalls angepasst werden.

Insbesondere kann das Ereignis E unter Ansprechen auf zumindest zwei Teilschlüssel (TS_{x;i}, TS_{y,i}) definiert werden. Das bedeutet, dass das Ereignis E allein durch die Kombination der Teilschlüssel entsteht. Das Ereignis E kann also ein graphisches Rauschen selbst sein. Ein derartiges Ereignis, welches ein graphisches Rauschen umfasst, kann zum Beispiel in Form des Anteils an Schwarz beziehungsweise Weiß eine Information enthalten.

Das sogenannte graphische Rauschen bildet dabei einen Grenzzustand für die durch visuelle Kryptographie verschlüsselte graphische Informationen. Ausgehend von diesem Grenzzustand ist insbesondere denkbar, dass die Teilschlüssel nicht ein graphisches Rauschen, sondern sozusagen "zersplitterte" graphische Elemente enthalten, so dass durch die Rekombination von Teilschlüsseln unterschiedliche Elemente mit sinnvollem Inhalt erzeugt werden können, je nachdem, welche Teilschlüssel zum Erzeugen des Ereignisses E kombiniert werden.

Im Rahmen des erfindungsgemäßen Verfahrens ist es jedoch auch möglich, das Ereignis E zu definieren, bevor zumindest ein Teilschlüssel (TS_{x,i}, TS_{y,i}) erzeugt wird. In Form dieses sozusagen zurückbehaltenen Teilschlüssels bietet sich vorteilhafterweise die Möglichkeit, auf ein zwischenzeitlich definiertes beziehungsweise verändertes Ereignis E zu reagieren und einen für die Rekombination passenden Teilschlüssel zu erzeugen.

Die Erfindung sieht insbesondere vor, dass zumindest ein Teilschlüssel (TS_{x,i}, TS_{y,i}) unter Ansprechen auf das zu verschlüsselnde Ereignis E erzeugt wird. Durch Rekombination mit dem zuvor erzeugten zumindest einen Teilschlüssel kann das Ereignis E ausgegeben werden.

Indem die Vergabe zumindest eines Teilschlüssels vor dem Definieren des Ereignisses E erfolgt, kann das erfindungsgemäße Verfahren bereits implementiert werden, ohne dass das Ereignis E bekannt sein muss.

Das Beispiel zum Themenkomplex der Mitgliedschaften, zu deren Berechtigung ein entsprechender Ausweis vorliegt, mag dies verdeutlichen. Ein auf dem Ausweis aufgebrachter Teilschlüssel wird gemäß dem erfindungsgemäßen Verfahren zuerst festgelegt. Ein weiterer Teilschlüssel, den ein Kontrolleur bekommt, kann sich jedoch ändern. So können immer neue Ereignisse durch Rekombination dieses weiteren Teilschlüssels mit dem unveränderten Teilschlüssel auf dem Ausweis rekombiniert werden.

Die zur Anpassung an sich ändernde Ereignisse zu aktualisierenden Teilschlüssel werden also an die Kontrolleure ausgegeben, welche in geringerer Zahl als die Inhaber der Ausweise vorhanden sind. So ermöglicht die Erfindung in überraschend einfacher Weise eine effiziente Nutzung von vorhandenen Ausweisen, indem die Ausgabe immer neuer Ausweise hinfällig wird.

Um so durch das erfindungsgemäße Verfahren eine flexible Anpassung an sich ändernde Ereignisse zu ermöglichen, sieht die Erfindung außerdem vor, dass die Vergabe zumindest eines Teilschlüssels nach dem Definieren des Ereignisses E erfolgt.

Um eine Kontrollmöglichkeit dafür zu schaffen, ob die Rekombination der vorliegenden Teilschlüssel das gewünschte Ereignis liefert, sieht die Erfindung des Weiteren vor, dass das Ereignis E an den zumindest einen ersten oder an zumindest einen weiteren Berechtigten vergeben wird.

Um die Sicherheit des erfindungsgemäßen Verfahrens auf einfache Weise zu erhöhen, kann des Weiteren beim Erzeugen zumindest eines Teilschlüssels (TS_{x,i}, TS,_{y,i}) ein Geheimnis G verwendet werden. Insbesondere bei Kenntnis des zu verschlüsselnden Ereignisses durch einen Angreifer kann so die Fälschungssicherheit der zu vergebenden Teilschlüssel deutlich gesteigert werden.

In diesem Zusammenhang sieht die Erfindung in vorteilhafter Weiterbildung zudem vor, dass dem zumindest einen Teilschlüssel (TS_{x,i}, TS_{y,i}) weitere Teilschlüssel (TS_{z,i}) zugeordnet werden. Diese Zuordnung der Teilschlüssel (TS_{x,i}, TS_{y,i}, TS_{z,i}) kann wahlweise gleichmäßig gewichtet oder zufällig erfolgen. Somit ist vorteilhafterweise auch das Zuordnen weiterer Teilschlüssel (TS_{z,i}) zu zumindest einem Teilschlüssel (TS_{x,i}, TS_{y,i}) flexibel an unterschiedlichste Anordnungen anpassbar.

Insbesondere bei hohen Sicherheitsanforderungen an das Verschlüsseln eines Ereignisses durch visuelle Kryptographie bietet das Zuordnen weiterer Teilschlüssel zu zumindest einem Teilschlüssel vorteilhafterweise die Möglichkeit, geheime Information auf mehrere Teilnehmer aufzuteilen. Dabei kann die geheime Information, nämlich der zumindest eine Teilschlüssel, anschließend rekonstruiert werden. Um die Sicherheit des erfindungsgemäßen Verfahrens noch weiter zu erhöhen, kann zumindest ein Teilschlüssel (TS_{x,i}, TS_{y,i}, TS_{z,i}) wiederum verschlüsselt werden.

Insbesondere ist gemäß einer vorteilhaften Weiterbildung vorgesehen, zum Erzeugen der Teilschlüssel (TS_{x,i}, TS_{y,i}, TS_{z,i}), eins sogenanntes Secret-Sharing-Verfahren einzusetzen. Auf diese Weise ist im Wesentlichen jegliche Manipulation beim Bereitstellen von Teilschlüsseln eines durch visuelle Kryptographie verschlüsselten Ereignisses E ausschließbar.

Der Einsatz eines Secret-Sharing-Verfahrens zum Erzeugen von Teilschlüsseln wird insbesondere in der deutschen Patentanmeldung DE 102 55 164 der Anmelderin beschrieben.

Um nicht nur beim Erzeugen der Teilschlüssel einem hohen Sicherheitsstandard zu genügen, sieht die Erfindung vorteilhafterweise des Weiteren vor, dass die Teilschlüssel (TS_{x,i}, TS_{y,i}, TS_{z,i}) beim Vergeben verschlüsselt übertragen werden. Dadurch kann eine Angriff während des Vergebens der Teilschlüssel im Wesentlichen ausgeschlossen, zumindest aber deutlich erschwert werden. Beispielsweise können die Teilschlüssel insbesondere per e-mail an einen Berechtigten gesendet werden, welcher sich dann nach einer Entschlüsselung der verschlüsselten Teilschlüssel die Teilschlüssel ausdrucken kann.

In einer vorteilhaften Weiterbildung können als weitere Teilschlüssel (TS_{z,i}) optische, akustische, kryptographische und/oder mathematische Information verwendet werden und/oder ein eine solche Information umfassender Code generiert werden. Insbesondere kann zumindest ein weiterer Teilschlüssel (TS_{z,i}) durch visuelle Kryptographie verschlüsselt werden.

Indem die Erfindung also verschiedenste Verschlüsselungsmethoden zum Einsatz beim Bereitstellen der weiteren Teilschlüssel (TS_{z,i}) vorsieht, wird vorteilhafterweise eine Anpassung an unterschiedlichste Sicherheitsanforderungen oder Ansprüche an die Benutzerfreundlichkeit sowie zur Verfügung stehende Vorrichtungen zum Bereitstellen der weiteren Teilschlüssel ermöglicht.

Die Erfindung sieht des Weiteren vor, dass dem zumindest einen ersten oder dem zumindest einen weiteren Berechtigten Daten zur Rekonstruktionsverifikation übertragen werden. So sind vorteilhafterweise zum Beispiel zueinander gehörende Teilschlüssel auf einfache Weise erkennbar.

Hierdurch eignet sich das erfindungsgemäße Verfahren insbesondere zur Nutzung beziehungsweise Bereitstellung unterschiedlichster, durch visuelle Kryptographie verschlüsselter Ereignisse E, welche in digitaler Form vorliegen und beispielsweise über das Internet vertrieben werden.

So kann der Kunde ein durch visuelle Kryptographie verschlüsseltes Ereignis erhalten, indem ihm ein öffentlich zugänglicher erster Teilschlüssel zur Verfügung gestellt wird, welcher jedoch nur mit zumindest einem weiteren Teilschlüssel zu dem gewünschten Ereignis rekombiniert werden kann.

Insbesondere für einen solchen Anwendungsfall sieht die Erfindung vorteilhafterweise außerdem vor, dass die Übertragung an die zur Rekonstruktion des zumindest einen Teilschlüssels (TS_{x,i}, TS_{y,i}) verwendbaren Einrichtung unter Verwendung eines Kommunikationsnetzes, insbesondere eines Intra-Netzes, des Internets, eines Mobilfunk-, Telefon-, Rundfunk- und/oder Fernsehnetzes erfolgt.

Die Erfindung stellt des Weiteren erstmals eine Vorrichtung zum Bereitstellen von Teilschlüsseln (TS_{x,i}, TS_{y,i}, TS_{z,i}) eines durch visuelle Kryptographie verschlüsselten Ereignisses E zur Verfügung, welche insbesondere zur Durchführung eines oben beschriebenen Verfahrens ausgebildet ist.

Die Vorrichtung umfasst auf einer Ausgabeseite eine erste Einrichtung zum Erzeugen zumindest eines ersten Teilschlüssels TS_{x,i}, eine erste Einrichtung zum Vergeben des zumindest einen ersten Teilschlüssels TS_{x,i} an zumindest einen ersten Berechtigten, eine zweite Einrichtung zum Erzeugen zumindest eines zweiten Teilschlüssels TS_{y,i} und eine zweite Einrichtung zum Vergeben des zumindest einen zweiten Teilschlüssels TS_{y,i} an den zumindest einen ersten oder an zumindest einen weiteren Berechtigten.

Zudem umfasst die erfindungsgemäße Vorrichtung in einer vorteilhafter Weiterbildung eine Einrichtung zum Definieren eines Ereignisses E. Die Einrichtung zum Definieren eines Ereignisses E kann derart ausgebildet sein, dass das Ereignis unter Ansprechen auf zumindest zwei Teilschlüssel TS_{x,i}, TS_{y,i} definiert wird. Dadurch ermöglicht es die erfindungsgemäße Vorrichtung in vorteilhafterweise, das Definieren des Ereignisses E allein durch die Kombination der Teilschlüssel zu realisieren.

Zudem kann gemäß der Erfindung zumindest eine Einrichtung zum Erzeugen eines Teilschlüssels TS_{x,i}, TS_{y,i} derart ausgebildet sein, dass zumindest ein Teilschlüssel unter Ansprechen auf das Ereignis E erzeugt wird. Damit schafft die erfindungsgemäße Vorrichtung vorteilhafterweise die Möglichkeit, ein Verfahren zum Bereitstellen von Teilschlüsseln eines durch visuelle Kryptographie verschlüsselten Ereignisses auch dann anwenden zu können, wenn ein sich änderndes Ereignis oder immer wieder neue Ereignisse Gegenstand des Verfahrens sind.

Um wie oben beschrieben vorteilhafterweise zumindest einem Teilschlüssel weitere Teilschlüssel zuordnen zu können, ist des Weiteren vorgesehen, dass die erfindungsgemäße Vorrichtung eine auf der Ausgabeseite angeordnete Einrichtung umfasst, welche Mittel zum Erzeugen einer zumindest einem ersten und/oder zumindest einem zweiten Teilschlüssel (TS_{x,i}, TS_{y,i}) zugeordneten Gruppe von weiteren Teilschlüsseln (TS_{z,i}) unter Verwendung einer Zuordnungsfunktion, und Mittel zum Übertragen zumindest eines Teilschlüssels (TS_{x,i}, TS_{y,i}) und/oder eines weiteren Teilschlüssels (TS_{z,i}) an eine Einrichtung auf Seiten eines Nutzers aufweist. Die Gruppe von weiteren Teilschlüsseln (TS_{z,i}) kann dabei wie oder mehr weitere Teilschlüssel (TS_{z,i}) umfassen.

Des Weiteren ist vorgesehen, dass die Vorrichtung zumindest eine auf der Ausgabeseite und/oder auf Seiten des Nutzers angeordnete Einrichtung umfasst, welche zum Verarbeiten von Teilschlüsseln (TS_{x,i}, TS_{y,i}, TS_{z,i}) ausgebildet ist. Dadurch bietet die erfindungsgemäße Vorrichtung vorteilhafterweise die Möglichkeit, die Teilschlüssel je nach Anforderungen auf unterschiedliche Weise beispielsweise an die Sicherheit oder den Bedienkomfort anzupassen.

Um wie oben beschrieben das Zuordnen weiterer Teilschlüssel zu zumindest einem Teilschlüssel realisieren zu können, ist zudem vorgesehen, dass die auf der Ausgabeseite angeordnete Einrichtung Mittel zum Auswählen einer Zuordnungsfunktion in Abhängigkeit einer definierten oder definierbaren Anzahl von Teilschlüsseln zum Erzeugen weiterer Teilschlüssel (TS_{z,i}) zu zumindest einem Teilschlüssel (TS_{x,i}, TS_{y,i}) umfasst. Insbesondere ist die Zuordnung der Teilschlüssel (TS_{x,i}, TS_{y,i}, TS_{z,i}) wählbar und erfolgt beispielsweise gewichtet oder zufällig.

In einer vorteilhaften Weiterbildung ist zudem vorgesehen, dass die auf der Ausgabeseite und/oder auf Seiten des Nutzers angeordnete Einrichtung zum Verarbeiten von Teilschlüsseln zur Verarbeitung von optischer, akustischer und/oder mathematischer Information ausgebildet ist. Des Weiteren kann die auf der Ausgabeseite angeordnete Einrichtung zum Verarbeiten von Teilschlüsseln zum Verschlüsseln der Teilschlüssel ausgebildet sein. So kann die erfindungsgemäße Vorrichtung vorteilhafterweise gegen äußere Manipulation entsprechend abgesichert werden, um zu verhindern, dass sich mehrere Nutzer zusammenschließen und ihre Teilschlüssel austauschen.

Um ein zuverlässiges Vergeben der Teilschlüssel sicherzustellen, ist zudem vorgesehen, dass die erfindungsgemäße Vorrichtung auf Seiten des Nutzers eine Einrichtung zum Empfangen von Teilschlüsseln und/oder verschlüsselten Teilschlüsseln (TS_{x,i}, TS_{y,i}, TS_{z,i}) unter Ansprechen auf das Übertragen der Teilschlüssel und/oder verschlüsselten Teilschlüsseln durch die Einrichtung auf der Ausgabeseite umfasst.

Um sicherzustellen, dass zum Rekombinieren des durch visuelle Kryptographie verschlüsselten Ereignisses E die erforderlichen Teilschlüssel auf Seiten des Nutzers vorliegen, kann die erfindungsgemäße Vorrichtung vorteilhafterweise eine auf Seiten des Nutzers angeordnete Einrichtung zum Rekonstruieren eines insbesondere unter Einbeziehung eines Secret-Sharing-Verfahrens verschlüsselten Teilschlüssels (TS_{x,i}, TS_{y,i}, TS_{z,i}) umfassen.

Insbesondere kann die dem Nutzer zugeordnete Einrichtung Mittel zum Rekonstruieren eines durch die auf der Ausgabeseite angeordnete Einrichtung verteilten Teilschlüssels (TS_{x,i}, TS_{y,i}) basierend auf einer vorgegebenen Anzahl von weiteren Teilschlüsseln (TS_{z,i}) umfassen.

In einer vorteilhaften Weiterbildung ist zudem vorgesehen, dass die dem Nutzer zugeordnete Einrichtung Mittel zum Erfassen von Teilschlüsseln (TS_{x,i}, TS_{y,i}, TS_{z,i}) und Mittel zum Berechnen und/oder Verifizieren einer für zumindest eine Gruppe von Teilschlüsseln (TS_{x,i}, TS_{y,i}, TS_{z,i}) gemeinsamen Zuordnungsfunktion umfasst. So kann vorteilhafterweise das Rekonstruieren von Teilschlüsseln unterstützt werden.

Um das durch visuelle Kryptographie verschlüsselte Ereignis nutzen zu können, ist des Weiteren vorgesehen, dass die dem Nutzer zugeordnete Einrichtung Mittel zum Entschlüsseln eines durch visuelle Kryptographie verschlüsselten Ereignisses E basierend auf zumindest einem Teilschlüssel (TS_{x,i}, TS_{y,i}) und/oder basierend auf zumindest einem rekonstruierten Teilschlüssel umfasst.

Um das erfindungsgemäße Verfahren vorteilhafterweise auch über große Entfernungen hinweg nutzen zu können, können die Einrichtungen der erfindungsgemäßen Vorrichtung mittels eines Kommunikationsnetzes verbindbar sein. Insbesondere kann gemäß einer vorteilhaften Weiterbildung der Erfindung die auf der Ausgabeseite angeordnete Einrichtung und/oder die auf Seiten des Nutzers angeordnete Einrichtung einen Mikroprozessor und/oder zur Durchführung des erfindungsgemäßen Verfahrens entsprechend ausgebildete Software umfassen.

Um die Erfindung insbesondere für Bücher, Zeitschriften, Eintrittskarten, Fahrscheine und Ausweise, also allgemein gedruckte Werke, anwenden zu können, ist zudem vorgesehen, dass die erfindungsgemäße Vorrichtung eine Einrichtung zum Erzeugen eines Teilschlüssels umfasst, welche für das Erzeugen des Teilschlüssels (TS_{x,i}, TS_{y,i}, TS_{z,i}) auf Seiten eines gedruckten Werkes ausgebildet ist.

Korrespondierend dazu ist des Weiteren vorgesehen, dass die Vorrichtung eine Einrichtung zum Erzeugen eines Teilschlüssels umfasst, welche für das Erzeugen des Teilschlüssels auf einem transparenten Medium, insbesondere einer Folie ausgebildet ist.

So kann als Ereignis E beispielsweise ein Inhalt eines Buches durch Rekombination der Teilschlüssel erzeugt werden, wobei das Ereignis wie eingangs beschrieben beim Drucken zumindest des ersten Teilschlüssels nicht bekannt sein muss. In einem weiteren Anwendungsbeispiel kann ein Teilschlüssel auf einem transparenten Medium, insbesondere einer Folie oder Glasplatte, und ein weiterer Teilschlüssel auf einem Ausweis abgedruckt sein. Die Kontrolle verschiedener Ausweise ist mit immer demselben transparenten Medium, welches den passenden Teilschlüssel aufweist, möglich.

Die Erfindung stellt des Weiteren erstmals ein Werk mit zumindest einem Abschnitt zur Verfügung, wobei der zumindest eine Abschnitt zumindest einen Teilschlüssel eines durch visuelle Kryptographie verschlüsselten Ereignisses E aufweist, wobei das Ereignis insbesondere einen Inhalt umfasst, welcher Text und/oder graphische Darstellung umfassen kann.

In einer vorteilhaften Weiterbildung ist vorgesehen, dass das erfindungsgemäße Werk ein druckbares Werk ist. Insbesondere kann es sich dabei um eine Datei handeln, welche Informationen in derartiger Form zur Verfügung stellt, dass durch Ausdrucken visuell bearbeitbare Information erzeugt werden kann.

Das erfindungsgemäße Werk umfasst in einer weiteren Weiterbildung außerdem ein gedrucktes Werk. Dabei kann es sich insbesondere um Bücher, Ausweise, Eintrittskarten und dergleichen, aber auch um Folien, Glasplatten und ähnliches handeln. Den gedruckten Werken ist gemeinsam, dass sie zumindest einen Teilschlüssel eines visuell verschlüsselten Ereignisses aufweisen.

Das erfindungsgemäße Werk kann insbesondere derart ausgebildet sein, dass zumindest der Abschnitt, welcher zumindest einen Teilschlüssel (TS_{x,i}, TS_{y,i}, TS_{z,i}) eines durch visuelle Kryptographie verschlüsselten Ereignisses E aufweist, auf ein transparentes Medium gedruckt ist.

Die Erfindung umfasst des Weiteren ein Implementationssoftwareprodukt mit auf wenigstens einem computerlesbaren Datenträger gespeicherten Programmcode zur Durchführung eines erfindungsgemäßen Verfahrens, welches insbesondere zur Implementation in einer erfindungsgemäßen Vorrichtung angepasst ist. Zudem sieht die Erfindung eine Verwendung einer erfindungsgemäßen Vorrichtung zur Durchführung eines erfindungsgemäßen Verfahrens vor. Diese Verwendung umfasst insbesondere das Herstellen eines wie oben beschriebenen druckbaren oder gedruckten Werkes.

Die Erfindung wird nachfolgend unter Bezugnahme auf die beigefügte Zeichnung anhand von Ausführungsbeispielen näher erläutert.

Es zeigt:

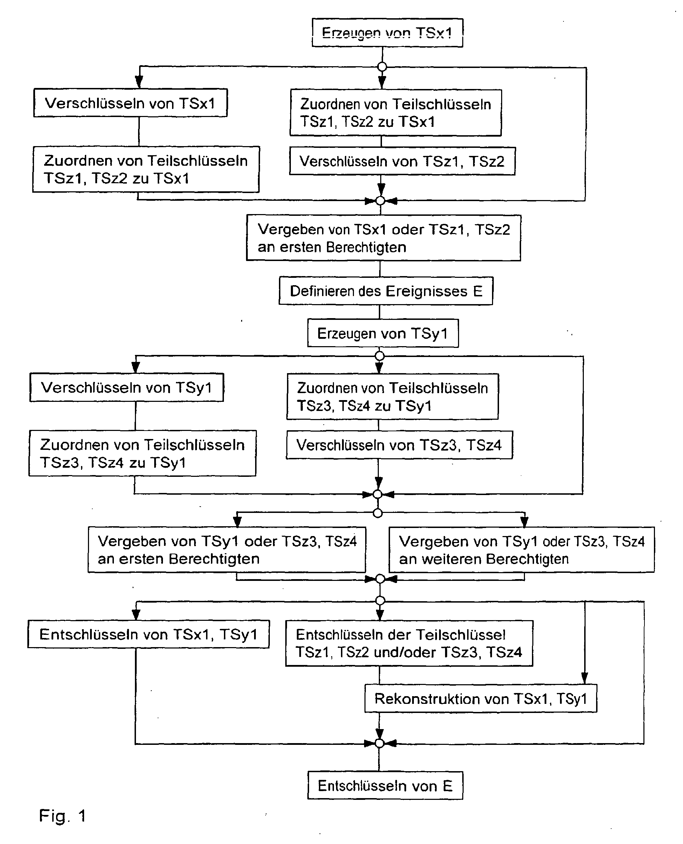

- Fig. 1: ein schematisches Flussdiagramm des erfindungsgemäßen Verfahrens.

In einem ersten Verfahrensschritt wird ein Teilschlüssel TS_{x,1} erzeugt. Der Teilschlüssel TS_{x,1} kann beispielsweise verschlüsselt werden, bevor weitere Teilschlüssel TS_{z,i} und TS_{z,2} dem Teilschlüssel TS_{x,1} zugeordnet werden. Auch der umgekehrte Fall ist möglich, indem dem Teilschlüssel TS_{x,1} zunächst weitere Teilschlüssel TS_{z,1} und TS_{z,2} zugeordnet werden, welche in einem folgenden Verfahrensschritt verschlüsselt werden. Das Zuordnen weiterer Teilschlüssel beziehungsweise das Verschlüsseln ist dabei optional. Der Übersichtlichkeit halber wurde auf die Darstellung weiterer Möglichkeiten zur Kombination von Zuordnung und Verschlüsselung in Fig. 1 verzichtet.

Der Teilschlüssel TS_{x,1} oder die zugeordneten weiteren Teilschlüssel TS_{z,1} und TS_{z,2} werden in einem folgenden Verfahrensschritt an einen ersten Berechtigten vergeben. Gemäß einer ersten Ausführungsform der Erfindung wird dann zu einem beliebigen Zeitpunkt das Ereignis E definiert.

Danach kann unter Ansprechen auf das Ereignis E ein zweiter Teilschlüssel TS_{y,1} erzeugt werden. Auch dieser Teilschlüssel TS_{y,1} kann grundsätzlich verschlüsselt werden, bevor ihm weitere Teilschlüssel TS_{z,3} und TS_{z,4} zugeordnet werden können.

Analog zum oben Gesagten kann alternativ dazu die Zuordnung der weiteren Teilschlüssel TS_{z,3} und TS_{z,4} zum Teilschlüssel TS_{y,1} auch erfolgen, bevor das Verschlüsseln der weiteren Teilschlüssel TS_{z,3} und TS_{z,4} durchgeführt wird. Das Zuordnen von weiteren Teilschlüsseln TS_{z,3}, TS_{z,4} zum Teilschlüssel TS_{y,1} beziehungsweise das Verschlüsseln des Teilschlüssels beziehungsweise der weiteren Teilschlüssel ist dabei optional zu verstehen.

Der Teilschlüssel TS_{y,1} oder die zugeordneten weiteren Teilschlüssel TS_{z,3} und TS_{z,4} werden dann in einem nächsten Verfahrensschritt entweder an den ersten Berechtigten oder an den weiteren Berechtigten vergeben.

Es folgt das Entschlüsseln des ersten und des zweiten Teilschlüssels TS_{x,1}, TS_{y,1} beziehungsweise das Entschlüsseln der weiteren Teilschlüssel TS_{z,1}, TS_{z,2} und/oder TS_{z,3} und TS_{z,4}. Gegebenenfalls können dann die Teilschlüssel TS_{x,1} und/oder TS_{y,1} rekonstruiert werden. Das Entschlüsseln sowie die Rekonstruktion der Teilschlüssel TS_{x,1} und TS_{y,1} sind optionale Verfahrensschritte, welche in Abhängigkeit von der vorangegangenen Art und Weise der Durchführung des Verfahrens ausgeführt werden.

Sobald alle Teilschlüssel TS_{x,1} und TS_{y,1} auf Seiten des ersten Berechtigten oder auf Seiten des weiteren Berechtigten vorliegen, kann das durch visuelle Kryptographie verschlüsselte Ereignis E entschlüsselt werden.

Als Beispiel für ein durch visuelle Kryptographie zu verschlüsselndes Ereignis soll im Folgenden ein Kontrollwert auf einem Studentenausweis betrachtet werden. Als erster Teilschlüssel wird ein graphisches Muster unter Einbeziehung der persönlichen Daten und eines Geheimnisses erzeugt. Dieses graphische Muster, welches den ersten Teilschlüssel darstellt, wird auf den Studentenausweis aufgedruckt. Der Ausweis, welcher den ersten Teilschlüssel umfasst, wird dann an den ersten Berechtigten, nämlich den Studenten, vergeben.

Nun kann in jedem Semester als Ereignis E die gültige Immatrikulation definiert werden. Entsprechend wird ein zweiter Teilschlüssel erzeugt, welcher als graphisches Muster auf zum Beispiel eine transparente Folie gedruckt wird. Dieser zweite Teilschlüssel wird an einen Kontrolleur als weiteren Berechtigten vergeben.

Soll eine Kontrolle durchgeführt werden, wird von dem Kontrolleur die Folie, welche den zweiten Teilschlüssel umfasst, mit dem Ausweis, welcher den ersten Teilschlüssel umfasst, rekombiniert. Unter Ansprechen auf eine gültige Immatrikulation des Studenten wurde der zweite Teilschlüssel derart erzeugt, dass für den aktuellen Zeitraum das jeweils gültige Ereignis sichtbar wird.

Beispielsweise kann der Teilschlüssel TS_{y,1}, welcher dem Kontrolleur vorliegt, in einem ersten Zeitraum 2001 derart ausgebildet sein, dass eine Rekombination als Ereignis "2001:ja" liefert. Liegt in einem zweiten Zeitraum keine gültige Immatrikulation vor, bleibt der an den Studenten ausgegebene Ausweis unverändert. Lediglich der zweite Teilschlüssel, welcher an den Kontrolleur vergeben wird, wird unter Ansprechen auf das veränderte Ereignis neu erzeugt. Durch Rekombination in einem entsprechenden zweiten Zeitraum 2002 erscheint dann zum Beispiel "2002:nein" als Ereignis.

Das oben genannte Beispiel verdeutlicht eine Möglichkeit zum vorteilhaften Einsatz der Erfindung. Im Allgemeinen dient das erfindungsgemäße Verfahren der effizienten Verwaltung von Mitgliedschaften, indem lediglich die Teilschlüssel, welche an potentielle Kontrolleure verteilt werden, unter Ansprechen von sich ändernden Ereignissen aktualisiert werden müssen. Die im Allgemeinen in wesentlich größerer Zahl vorliegenden Teilschlüssel auf den Ausweisen der Mitglieder können hingegen unverändert bleiben.

## Patentansprüche

1. Verfahren zum Bereitstellen von Teilschlüsseln (TS_{x,i}, TS_{y,i}) einer durch visuelle Kryptographie verschlüsselten Information E, bei welchem
zumindest ein erster Teilschlüssel (TS_{x,i}) erzeugt wird,
der zumindest eine erste Teilschlüssel (TS_{x,i}) an zumindest einen ersten Berechtigten vergeben wird,
zumindest ein zweiter Teilschlüssel (TS_{y,i}) erzeugt wird, und
der zumindest eine zweite Teilschlüssel (TS_{y,i}) an den zumindest einen ersten oder an zumindest einen weiteren Berechtigten vergeben wird,
zumindest ein Teilschlüssel (TS_{x,i}, TS_{y,i}) abhängig von der zu verschlüsselnden Information E erzeugt wird, **dadurch gekennzeichnet, daß** zumindest ein anderer Teilschlüssel (TS_{x,i}, TS_{y,i}) unabhängig von der zu verschlüsselnden Information E erzeugt wird, ohne daß die zu verschlüsselnde Information bekannt ist.

2. Verfahren nach Anspruch 1, bei welchem eine Information E definiert wird.

3. Verfahren nach einem der vorangegangenen Ansprüche, **dadurch gekennzeichnet, dass** die Information E unter Ansprechen auf zumindest zwei Teilschlüssel (TS_{x,i}, TS_{y,i}) definiert wird.

4. Verfahren nach einem der Ansprüche 1 oder 2, **dadurch gekennzeichnet, dass** die Information E definiert wird, bevor zumindest ein Teilschlüssel (TS_{x,i}, TS_{y,i}) erzeugt wird.

5. Verfahren nach Anspruch 4, **dadurch gekennzeichnet, dass** zumindest ein Teilschlüssel (TS_{x,i}, TS_{y,i}) unter Ansprechen auf die zu verschlüsselnde Information E erzeugt wird.

6. Verfahren nach einem der vorangegangenen Ansprüche, **dadurch gekennzeichnet, dass** die Vergabe zumindest eines Teilschlüssels vor dem Definieren der Information E erfolgt.

7. Verfahren nach einem der vorangegangenen Ansprüche, **dadurch gekennzeichnet, dass** die Vergabe zumindest eines Teilschlüssels nach dem Definieren der InformationE erfolgt.

8. Verfahren nach einem der vorangegangenen Ansprüche, bei welchem die Information E an den zumindest einen ersten oder an zumindest einen weiteren Berechtigten vergeben wird.

9. Verfahren nach einem der vorangegangenen Ansprüche, **dadurch gekennzeichnet, dass** beim Erzeugen zumindest eines Teilschlüssels (TS_{x,i}, Ts_{y,i}) ein Geheimnis G verwendet wird.

10. Verfahren nach einem der vorangegangenen Ansprüche, **dadurch gekennzeichnet, dass** dem zumindest einen Teilschlüssel (TS_{x,i}, TS_{y,i}) weitere Teilschlüssel (TS_{z,i}) zugeordnet werden.

11. Verfahren nach einem der vorstehenden Ansprüche, **dadurch gekennzeichnet, dass** die Zuordnung der Teilschlüssel (TS_{x,i}, TS_{y,i}, TS_{z,i}) gleichmäßig, gewichtet oder zufällig erfolgt.

12. Verfahren nach einem der vorstehenden Ansprüche, **dadurch gekennzeichnet, dass** zumindest ein Teilschlüssel (TS_{x,i}, TS_{y,i}, TS_{z,i}) wiederum verschlüsselt wird.

13. Verfahren nach einem der vorstehenden Ansprüche, **dadurch gekennzeichnet, dass** zur Erzeugung der Teilschlüssel (TS_{x,i}, TS_{y,i}, TS_{z,i}) ein Secret-Sharing-Verfahren eingesetzt wird.

14. Verfahren nach einem der vorstehenden Ansprüche, **dadurch gekennzeichnet, dass** die Teilschlüssel (TS_{x,i}, TS_{y,i}, TS_{z,i}) beim Vergeben verschlüsselt übertragen werden.

15. Verfahren nach einem der vorstehenden Ansprüche, **dadurch gekennzeichnet, dass** als weitere Teilschlüssel (TS_{z,i}) optische, akustische, kryptographische und/oder mathematische Information verwendet wird und/oder ein eine solche Information umfassender Code generiert wird.

16. Verfahren nach einem der vorstehenden Ansprüche, **dadurch gekennzeichnet, dass** dem zumindest einen ersten oder dem zumindest einen weiteren Berechtigten Daten zur Rekonstruktionsverifikation übertragen werden.

17. Verfahren nach einem der vorstehenden Ansprüche, **dadurch gekennzeichnet, dass** die Übertragung an die zur Rekonstruktion des zumindest einen Teilschlüssels (TS_{x,i}, TS_{y,i}) verwendbaren Einrichtung unter Verwendung eines Kommunikationsnetzes, insbesondere eines Intranetzes, des Internets, eines Mobilfunk-, Telefon-, Rundfunk- und/oder Fernsehnetzes erfolgt.

18. Vorrichtung zum Bereitstellen von Teilschlüsseln (TS_{x,i}, TS_{y,i}, TS_{z,i}) einer durch visuelle Kryptographie verschlüsselten Information E, mit Mitteln zur Durchführung der Verfahrenschritte eines Verfahrens nach einem der vorstehenden Ansprüche.

19. Vorrichtung nach Anspruch 18, welche auf einer Ausgabeseite
eine erste Einrichtung zum Erzeugen zumindest eines ersten Teilschlüssels (TS_{x,i}),
eine erste Einrichtung zum Vergeben des zumindest einen ersten Teilschlüssels (TS_{x,i}) an zumindest einen ersten Berechtigten,
eine zweite Einrichtung zum Erzeugen zumindest eines zweiten Teilschlüssels (TS_{y,i}), und
eine zweite Einrichtung zum Vergeben des zumindest einen zweiten Teilschlüssels (TS_{y,i}) an den zumindest einen ersten oder an zumindest einen weiteren Berechtigten
umfaßt.

20. Vorrichtung nach einem der Ansprüche 18 oder 19, welche eine Einrichtung zum Definieren einer Information E umfasst.

21. Vorrichtung nach einem der Ansprüche 18 bis 20, **dadurch gekennzeichnet, dass** die Einrichtung zum Definieren einer Information E derart ausgebildet ist, dass die Information E unter Ansprechen auf zumindest zwei Teilschlüssel (TS_{x,i}, TS_{y,i}) definiert wird.

22. Vorrichtung nach einem der Ansprüche 18 bis 21, **dadurch gekennzeichnet, dass** zumindest eine Einrichtung zum Erzeugen eines Teilschlüssels (TS_{x,i}, TS_{y,i}) derart ausgebildet ist, dass zumindest ein Teilschlüssel (TS_{x,i}, TS_{y,i}) unter Ansprechen auf die Information E erzeugt wird.

23. Vorrichtung nach einem der Ansprüche 18 bis 22, **dadurch gekennzeichnet, dass** eine auf der Ausgabeseite angeordnete Einrichtung
Mittel zum Erzeugen einer zumindest einem ersten und/oder zumindest einem zweiten Teilschlüssel (TSₓ,ᵢ, TS_{y,i}) zugeordneten Gruppe von weiteren Teilschlüsseln (TS_{z,i}) unter Verwendung einer Zuordnungsfunktion, und
Mittel zum Übertragen zumindest eines Teilschlüssels (TS_{x,i}, TS_{y,i}) und/oder eines weiteren Teilschlüssels (TS_{z,i}) an eine Einrichtung auf Seiten eines Nutzers umfasst.

24. Vorrichtung nach einem der Ansprüche 18 bis 23, **gekennzeichnet durch** zumindest eine auf der Ausgabeseite und/oder auf Seiten des Nutzers angeordnete Einrichtung, welche zum Verarbeiten von Teilschlüsseln (TS_{x,i}, TS_{y,i}, TS_{z,i}) ausgebildet ist.

25. Vorrichtung nach einem der Ansprüche 18 bis 24, **dadurch gekennzeichnet, dass** die auf der Ausgabeseite angeordnete Einrichtung Mittel zum Auswählen einer Zuordnungsfunktion in Abhängigkeit einer definierten oder definierbaren Anzahl von Teilschlüsseln zum Erzeugen weiterer Teilschlüssel (TS_{z,i}) zu zumindest einem Teilschlüssel (TS_{x,i}, Ts_{y,i}) umfasst.

26. Vorrichtung nach einem der Ansprüche 18 bis 25, **dadurch gekennzeichnet, dass** die Zuordnung der Teilschlüssel (TS_{x,i}, TS_{y,i}, TS_{z,i}) wählbar ist, insbesondere gewichtet oder zufällig erfolgt.

27. Vorrichtung nach einem der Ansprüche 18 bis 26, **dadurch gekennzeichnet, dass** die auf der Ausgabeseite und/oder auf Seiten des Nutzers angeordnete Einrichtung zum Verarbeiten von Teilschlüsseln (TS_{x,i}, TS_{y,i}, TS_{z,i}) zum Verarbeiten von optischer, akustischer und/oder mathematischer Information ausgebildet ist.

28. Vorrichtung nach einem der Ansprüche 18 bis 27, **dadurch gekennzeichnet, dass** die auf der Ausgabeseite angeordnete Einrichtung zum Verarbeiten von Teilschlüsseln (TS_{x,i}, TS_{y,i}, TS_{z,i}) zum Verschlüsseln der Teilschlüssel (TS_{x,i}, Ts_{y,i}, Ts_{z,i}) ausgebildet ist.

29. Vorrichtung nach einem der Ansprüche 18 bis 28, welche auf Seiten des Nutzers eine Einrichtung zum Empfangen von Teilschlüsseln und/oder verschlüsselten Teilschlüsseln (TS_{x,i}, Ts_{y,i}, Ts_{z,i}) unter Ansprechen auf das Übertragen der Teilschlüssel und/oder verschlüsselten Teilschlüsseln (TS_{x,i}, TS_{y,i}, TS_{z,i}) durch die Einrichtung auf der Ausgabeseite umfasst.

30. Vorrichtung nach einem der Ansprüche 18 bis 29, welche eine auf Seiten des Nutzers angeordnete Einrichtung zum Rekonstruieren eines, insbesondere unter Einbeziehung eines Secret-Sharing-Verfahrens verschlüsselten Teilschlüssels (TS_{x,i}, TS_{y,i}, TS_{z,i}) umfaßt.

31. Vorrichtung nach einem der Ansprüche 18 bis 30, **dadurch gekennzeichnet, dass** die dem Nutzer zugeordnete Einrichtung Mittel zum Rekonstruieren eines durch die auf der Ausgabeseite angeordnete Einrichtung verteilten Teilschlüssels (TS_{x,i}, TS_{y,i}) basierend auf einer vorgegebenen Anzahl von weiteren Teilschlüsseln (TS_{z,i}) umfasst.

32. Vorrichtung nach einem der Ansprüche 18 bis 31, **dadurch gekennzeichnet, dass** die dem Nutzer zugeordnete Einrichtung
Mittel zum Erfassen von Teilschlüsseln (TS_{x,i}, TS_{y,i}, TS_{z,i}), und
Mittel zum Berechnen und/oder Verifizieren einer für zumindest eine Gruppe von Teilschlüsseln (TS_{x,i}, TS_{y,i}, TS_{z,i}) gemeinsamen Zuordnungsfunktion
umfasst.

33. Vorrichtung nach einem der Ansprüche 18 bis 32, **dadurch gekennzeichnet, dass** die dem Nutzer zugeordnete Einrichtung Mittel zum Entschlüsseln einers durch visuelle Kryptographie verschlüsselten Information E basierend auf zumindest einem Teilschlüssel (TS_{x,i}, TS_{y,i}) und/oder basierend auf zumindest einem rekonstruierten Teilschlüssel (TS_{x,i}, TS_{y,i}) umfasst.

34. Vorrichtung nach einem der Ansprüche 18 bis 33, bei welcher die Einrichtungen mittels eines Kommunikationsnetzes verbindbar sind.

35. Vorrichtung nach einem der Ansprüche 18 bis 34, **dadurch gekennzeichnet, dass** die auf der Ausgabeseite angeordnete Einrichtung und/oder die auf Seiten des Nutzers angeordnete Einrichtung einen Mikroprozessor und/oder zur Durchführung des Verfahrens nach einem der vorstehenden Ansprüche 1 bis 17 entsprechend ausgebildete Software umfassen.

36. Vorrichtung nach einem der Ansprüche 18 bis 35, **dadurch gekennzeichnet, dass** eine Einrichtung zum Erzeugen eines Teilschlüssels für das Erzeugen des Teilschlüssels (TS_{x,i}, TS_{y,i}, TS_{z,i}) auf Seiten eines gedruckten Werkes ausgebildet ist.

37. Vorrichtung nach Anspruch 36, **dadurch gekennzeichnet, dass** eine Einrichtung zum Erzeugen eines Teilschlüssels für das Erzeugen des Teilschlüssels (TS_{x,i}, TS_{y,i}, TS_{z,i}) auf einem transparenten Medium, insbesondere einer Folie, ausgebildet ist.

38. Druckbares oder gedrucktes Werk mit zumindest einem Abschnitt, welcher zumindest einen Teilschlüssel (TS_{x,i}, TS_{y,i}, TS_{z,i}) einer durch visuelle Kryptographie verschlüsselten Information E aufweist, wobei die Information einen Inhalt umfasst, welcher Text und/oder graphische Darstellung umfassen kann,
wobei
der Teilschlüssel nach einem Verfahren gemäß einem der Ansprüche 1 bis 17 erzeugt wird.

39. Werk nach Anspruch 38, **dadurch gekennzeichnet, dass** zumindest der Abschnitt, welcher zumindest einen Teilschlüssel (TS_{x,i}, TS_{y,i}, TS_{z,i}) einer durch visuelle Kryptographie verschlüsselten Information E aufweist, auf ein transparentes Medium gedruckt ist.

40. Implementationssoftwareprodukt mit auf wenigstens einem computerlesbaren Datenträger gespeicherten Programmcode, insbesondere angepasst zur Implementation in einer Vorrichtung nach einem der Ansprüche 18 bis 37,
wobei
das Implementationssoftwareprodukt mit Programmcodeschritten zur Durchführung der Verfahrenschritte des Verfahrens nach einem der Ansprüche 1 bis 17 ausgebildet ist, wenn der Programmcode von dem Datenträger mittels eines Computers gelesen wird.

41. Verwendung einer Vorrichtung nach einem der Ansprüche 18 bis 37
zur Durchführung eines Verfahrens nach einem der Ansprüche 1 bis 17.

42. Verwendung nach Anspruch 41 zum Herstellen eines gedruckten Werkes.

## Claims

1. Method for providing subkeys (TS_{x,i}, TS_{y,i}) of an item of information E encrypted through visual cryptography, in which
at least one first subkey (TS_{x,i}) is generated,
the at least one first subkey (TS_{x,i}) is distributed to at least one first authorized party,
at least one second subkey (TS_{y,i}) is generated, and
the at least one second subkey (TS_{y,j}) is distributed to the at least one first or to at least one additional authorized party,
at least one subkey (TS_{x,i}, TS_{y,j}) is generated as a function of the information E to be encrypted,
**characterized in that**
at least one other subkey (TS_{x,i}, TS_{y,i}) is generated independently of the information E to be encrypted, without the information to be encrypted being known.

2. Method according to claim 1, in which an item of information E is defined.

3. Method according to any one of the preceding claims, **characterized in that** the item of information E is defined in response to at least two subkeys (TS_{x,i}, TS_{y,j}).

4. Method according to any one of claims 1 or 2, **characterized in that** the item of information E is defined before at least one subkey (TS_{x,i}, TS_{y,i}) is generated.

5. Method according to claim 4, **characterized in that** at least one subkey (TS_{x,i}, TS_{y,i}) is generated in response to the information E to be encrypted.

6. Method according to any one of the preceding claims, **characterized in that** the distribution of at least one subkey takes place before the definition of the information E.

7. Method according to any one of the preceding claims, **characterized in that** the distribution of at least one subkey takes place after the definition of the information E.

8. Method according to any one of the preceding claims, in which the information E is distributed to the at least one first authorized party or to at least one additional authorized party.

9. Method according to any one of the preceding claims, **characterized in that** a secret G is used in the generation of at least one subkey (TS_{x,i}, TS_{y,i}).

10. Method according to any one of the preceding claims, **characterized in that** additional subkeys (TS_{z,i}) are associated with the at least one subkey (TS_{x,i}, TS_{y,i}).

11. Method according to any one of the preceding claims, **characterized in that** the association of the subkeys (TS_{x,i}, TS_{y,i}, TS_{z,i}) takes place in a uniform, weighted, or random manner.

12. Method according to any one of the preceding claims, **characterized in that** at least one subkey (TS_{x,i}, TS_{y,i,} TS_{z,i}) is itself encrypted.

13. Method according to any one of the preceding claims, **characterized in that** a secret sharing method is used for generating the subkeys (TS_{x,i}, TS_{y,i}, TS_{z,i}).

14. Method according to any one of the preceding claims, **characterized in that** the subkeys (TS_{x,i}, TS_{y,i}, TS_{z,i}) are transmitted in encrypted form during distribution.

15. Method according to any one of the preceding claims, **characterized in that** the optical, acoustic, cryptographic, and/or mathematical information is used as additional subkeys (TS_{z,i}) and/or a code incorporating such an item of information is generated.

16. Method according to any one of the preceding claims, **characterized in that** data for reconstruction verification is transmitted to the at least one first authorized party or the at least one additional authorized party.

17. Method according to any one of the preceding claims, **characterized in that** the transmission takes place to the apparatus that can be used for reconstruction of the at least one subkey (TS_{x,i}, TS_{y,i}) through the use of a communication network, in particular an intranet, the Internet, a mobile telephony network, telephone network, radio network and/or television network.

18. Device for providing subkeys (TS_{x,i}, TS_{y,i}, TS_{z,i}) of an item of information E encrypted through visual cryptography, having means for carrying out the steps of a method according to any one of the preceding claims.

19. Device according to claim 18, which, on an output side, includes
a first apparatus for generating at least one first subkey (TS_{x,i}),
a first apparatus for distributing the at least one first subkey (TS_{x,i}) to at least one first authorized party,
a second apparatus for generating at least one second subkey (TS_{y,i}), and
a second apparatus for distributing the at least one second subkey (TS_{y,i}) to the at least one first authorized party or to at least one additional authorized party.

20. Device according to any one of the claims 18 or 19, which includes an apparatus for defining an item of information E.

21. Device according to any one of claims 18 through 20, **characterized in that** the apparatus for defining an item of information E is designed such that the item of information E is defined in response to at least two subkeys (TS_{x,i}, TS_{y,i}).

22. Device according to any one of claims 18 through 21, **characterized in that** at least one apparatus for generating a subkey (TS_{x,i}, TS_{y,i}) is designed such that at least one subkey (TS_{x,i}, TS_{y,i}) is generated in response to the information E.

23. Device according to any one of claims 18 through 22, **characterized in that** an apparatus located on the output side includes
means for generating a group of additional subkeys (TS_{z,i}) associated with at least one first and/or at least one second subkey (TS_{x,i}, TS_{y,i}) using an association function, and
means for transmitting at least one subkey (TS_{x,i}, TS_{y,i}) and/or an additional subkey (TS_{z,i}) to an apparatus at a user's location.

24. Device according to any one of claims 18 through 23, **characterized by** at least one apparatus located on the output side and/or at the user's location that is designed for processing subkeys (TS_{x,i}, TS_{y,i}, TS_{z,i}).

25. Device according to any one of claims 18 through 24, **characterized in that** the apparatus located on the output side includes means for selecting an association function depending on a defined or definable number of subkeys for generating additional subkeys (TS_{z,i}) to at least one subkey (TS_{x,i}, TS_{y,i}).

26. Device according to any one of claims 18 through 25, **characterized in that** the association of subkeys (TS_{x,i}, TS_{y,i}, TS_{z,i}) is selectable, in particular takes place in a weighted or random manner.

27. Device according to any one of claims 18 through 26, **characterized in that** the apparatus for processing subkeys (TS_{x,i}, TS_{y,i}, TS_{z,i}) located on the output side and/or at the user's location is designed to process optical, acoustic, and/or mathematical information.

28. Device according to any one of claims 18 through 27, **characterized in that** the apparatus for processing subkeys (TS_{x,i}, TS_{y,i}, TS_{z,i}) located on the output side is designed to encrypt the subkeys (TS_{x,i}, TS_{y,i}, TS_{z,i}).

29. Device according to any one of claims 18 through 28, which includes an apparatus at the user's location for receiving subkeys and/or encrypted subkeys (TS_{x,i}, TS_{y,i}, TS_{z,i}) in response to the transmission of the subkeys and/or encrypted subkeys (TS_{x,i}, TS_{y,i}, TS_{z,i}) by the apparatus on the output side.

30. Device according to any one of claims 18 through 29, which includes an apparatus located at the user's location for reconstructing a subkey (TS_{x,i}, TS_{y,i}, TS_{z,i}) that has been encrypted, in particular using a secret sharing method.

31. Device according to any one of claims 18 through 30, **characterized in that** the apparatus associated with the user includes means for reconstructing a subkey (TS_{x,i}, TS_{y,i}) distributed by the apparatus located on the output side, based on a predefined number of additional subkeys (TS_{z,i}).

32. Device according to any one of claims 18 through 31, **characterized in that** the apparatus associated with the user includes
means for acquiring subkeys (TS_{x,i}, TS_{y,i}, TS_{z,i}), and
means for calculating and/or verifying an association function that is common to at least one group of subkeys (TS_{x,i}, TS_{y,i}, TS_{z,i}).

33. Device according to any one of claims 18 through 32, **characterized in that** the apparatus associated with the user includes means for decrypting an item of information E encrypted through visual cryptography based on at least one subkey (TS_{x,i}, TS_{y,i}) and/or based on at least one reconstructed subkey (TS_{x,i}, TS_{y,i}).

34. Device according to any one of claims 18 through 33, in which the apparatuses can be connected by means of a communication network.

35. Device according to any one of claims 18 through 34, **characterized in that** the apparatus located on the output side and/or the apparatus located at the user's location includes a microprocessor and/or software appropriately designed to carry out the method according to any one of the preceding claims 1 through 17.

36. Device according to any one of claims 18 through 35, **characterized in that** an apparatus for generating a subkey is designed to generate the subkey (TS_{x,i}, TS_{y,i}, TS_{z,i}) on pages of a printed work.

37. Device according to claim 36, **characterized in that** an apparatus for generating a subkey is designed to generate the subkey. (TS_{x,i}, TS_{y,i}, TS_{z,i}) on a transparent medium, in particular a film.

38. Printable or printed work with at least one section that has at least one subkey (TS_{x,i}, TS_{y,i}, TS_{z,i}) of an item of information E encrypted through visual cryptography, wherein the information includes a content that can include text and/or graphic representation, wherein the subkey is generated using a method according to any one of claims 1 through 17.

39. Work according to claim 38, **characterized in that** at least the section that has at least one subkey (TS_{x,i}, TS_{y,i}, TS_{z,i}) of an item of information E encrypted through visual cryptography is printed on a transparent medium.

40. Implementation software product with program code stored on at least one computer-readable data medium, in particular adapted for implementation in a device according to any one of claims 18 through 37,
wherein
the implementation software product is designed with program code steps for carrying out the steps of the method according to any one of claims 1 through 17 when the program code is read from the data medium by means of a computer.

41. Use of a device according to any one of claims 18 through 37 to carry out a method according to any one of claims 1 through 17.

42. Use according to claim 41 to produce a printed work.

## Revendications

1. Procédé de fourniture de clés partielles (TS_{x,i}, TS_{y,i}) d'une information E cryptée par cryptographie visuelle dans lequel
au moins une première clé partielle (TS_{x,i}) est générée,
la au moins une première clé partielle (TS_{x,i}) est attribuée à au moins un premier bénéficiaire,
au moins une deuxième clé partielle (TS_{y,j}) est générée, et
la au moins deuxième clé partielle (TS_{y,i}) est attribuée au au moins un premier bénéficiaire ou à au moins un autre bénéficiaire,
au moins une clé partielle (TS_{x,i}, TS_{y,i}) est générée en fonction de l'information E à crypter, **caractérisé en ce qu'**au moins une autre clé partielle (TS_{x,i}, TS_{y,i}) est générée indépendamment de l'information E à crypter.

2. Procédé selon la revendication 1, dans lequel une information E est définie.

3. Procédé selon l'une des revendications précédentes, **caractérisé en ce que** l'information E est définie en réponse à au moins deux clés partielles (TS_{x,i}, TS_{y,i}).

4. Procédé selon l'une des revendications 1 ou 2, **caractérisé en ce que** l'information E est définie avant qu'au moins une clé partielle (TS_{x,i}, TS_{y,i}) soit générée.

5. Procédé selon la revendication 4, **caractérisé en ce qu'**au moins une clé partielle (TS_{x,i}, TS_{y,i}) est générée en réponse à l'information E à crypter.

6. Procédé selon l'une des revendications précédentes, **caractérisé en ce que** l'attribution d'au moins une clé partielle s'effectue avant la définition de l'information E.

7. Procédé selon l'une des revendications précédentes, **caractérisé en ce que** l'attribution d'au moins une clé partielle s'effectue après la définition de l'information E.

8. Procédé selon l'une des revendications précédentes, dans lequel l'information E est attribuée au au moins un premier ou à au moins un autre bénéficiaire.

9. Procédé selon l'une des revendications précédentes, **caractérisé en ce que**, pour générer au moins une clé partielle (TS_{x,i}, TS_{y,i}), un secret G est utilisé.

10. Procédé selon l'une des revendications précédentes, **caractérisé en ce que** d'autres clés partielles (TS_{z,i}) sont affectées à la moins une clé partielle (TS_{x,i}, TS_{y,i}).

11. Procédé selon l'une des revendications précédentes, **caractérisé en ce que** l'affectation des clés partielles (TS_{x,i}, TS_{y,i}, TS_{z,i}) s'effectue de manière homogène, pondérée ou aléatoire.

12. Procédé selon l'une des revendications précédentes, **caractérisé en ce qu'**au moins une clé partielle (TS_{x,i}, TS_{y,i}, TS_{z,i}) est de nouveau cryptée.

13. Procédé selon l'une des revendications précédentes, **caractérisé en ce que**, pour générer les clés partielles (TS_{x,i}, TS_{y,i}, TS_{z,i}), un procédé de partage de secret est utilisé.

14. Procédé selon l'une des revendications précédentes, **caractérisé en ce que** les clés partielles (TS_{x,i}, TS_{y,i}, TS_{z,i}) sont transmises cryptées lors de l'attribution.

15. Procédé selon l'une des revendications précédentes, **caractérisé en ce qu'**une information optique, acoustique, cryptographique et/ou mathématique est utilisée et/ou un code comprenant une telle information est généré comme autres clés partielles (TS_{z,i}).

16. Procédé selon l'une des revendications précédentes, **caractérisé en ce que** des données destinées à la vérification de la reconstruction sont transmises au au moins un premier ou au au moins un autre bénéficiaire.

17. Procédé selon l'une des revendications précédentes, **caractérisé en ce que** la transmission au dispositif apte à être utilisé pour la reconstruction de la au moins une clé partielle (TS_{x,i}, TS_{y,i}) s'effectue en utilisant un réseau de communication, notamment un intranet, l'internet, un réseau de téléphonie mobile, de téléphone, de radio et/ou de télévision.

18. Dispositif de fourniture de clés partielles (TS_{x,i}, TS_{y,i}, TS_{z,i}) d'une information E cryptée par cryptographie visuelle, comportant des moyens de mise en oeuvre des étapes de procédé d'un procédé selon l'une des revendications précédentes.

19. Dispositif selon la revendication 18 comprenant côté sortie
un premier moyen pour générer au moins une première clé partielle (TS_{x,j}),
un premier moyen pour attribuer la au moins une première clé partielle (TS_{x,i}) à au moins un premier bénéficiaire,
un deuxième moyen pour générer au moins une deuxième clé partielle (TS_{y,j}), et
un deuxième moyen pour attribuer la au moins deuxième clé partielle (TS_{y,i}) au au moins un premier ou à au moins un autre bénéficiaire.

20. Dispositif selon l'une des revendications 18 ou 19 comprenant un moyen pour définir une information E.

21. Dispositif selon l'une des revendications 18 à 20, **caractérisé en ce que** le moyen pour définir une information E est conçu de manière que l'information E soit définie en réponse à au moins deux clés partielles (TS_{x,i}, TS_{y,i}).

22. Dispositif selon l'une des revendications 18 à 21, **caractérisé en ce qu'**au moins un moyen pour générer une clé partielle (TS_{x,i}, TS_{y,i}) est conçu de manière à générer au moins une clé partielle (TS_{x,i}, TS_{y,i}) en réponse à l'information E.

23. Dispositif selon l'une des revendications 18 à 22, **caractérisé en ce qu'**un moyen disposé côté sortie comprend
des moyens pour générer un groupe d'autres clés partielles (TS_{z,i}) affecté à au moins une première et/ou à au moins une deuxième clé partielle (TS_{x,i}, TS_{y,i}) en utilisant une fonction d'affectation, et
des moyens pour transmettre au moins une clé partielle (TS_{x,i}, TS_{y,i}) et/ou une autre clé partielle (TS_{z,i}) à un moyen du côté d'un utilisateur.

24. Dispositif selon l'une des revendications 18 à 23, **caractérisé par** au moins un moyen disposé côté sortie et/ou côté utilisateur et conçu pour le traitement de clés partielles (TS_{x,i}, TS_{y,i}, TS_{z,i}).

25. Dispositif selon l'une des revendications 18 à 24, **caractérisé en ce que** le moyen disposé côté sortie comprend des moyens pour choisir une fonction d'affectation en fonction d'un nombre défini ou définissable de clés partielles pour générer d'autres clés partielles (TS_{z,i}) pour au moins une clé partielle (TS_{x,i}, TS_{y,i}).

26. Dispositif selon l'une des revendications 18 à 25, **caractérisé en ce que** l'affectation des clés partielles (TS_{x,i}, TS_{y,i}, TS_{z,i}) peut être choisie et s'effectue notamment de manière pondérée ou aléatoire.

27. Dispositif selon l'une des revendications 18 à 26, **caractérisé en ce que** le moyen de traitement de clés partielles (TS_{x,i}, TS_{y,i}, TS_{z,i}) disposé côté sortie et/ou côté utilisateur est conçu pour le traitement d'une information optique, acoustique et/ou mathématique.

28. Dispositif selon l'une des revendications 18 à 27, **caractérisé en ce que** le moyen de traitement de clés partielles (TS_{x,i}, TS_{y,i}, TS_{z,i}) disposé côté sortie est conçu pour le cryptage de clés partielles (TS_{x,i}, TS_{y,i}, TS_{z,i}).

29. Dispositif selon l'une des revendications 18 à 28 comprenant, côté utilisateur, un moyen de réception de clés partielles et/ou de clés partielles cryptées (TS_{x,i}, TS_{y,i}, TS_{z,i}) en réponse à la transmission des clés partielles et/ou des clés partielles cryptées (TS_{x,i}, TS_{y,i}, TS_{z,i}) par le moyen côté sortie.

30. Dispositif selon l'une des revendications 18 à 29 comprenant, côté utilisateur, un moyen de reconstruction d'une clé partielle cryptée (TS_{x,i}, TS_{y,i}, TS_{z,i}), notamment en mettant en oeuvre un procédé de partage de secret.

31. Dispositif selon l'une des revendications 18 à 30, **caractérisé en ce que** le moyen affecté à l'utilisateur comprend des moyens de reconstruction d'une clé partielle (TS_{x,i}, TS_{y,i}) attribuée par le moyen disposé côté sortie, sur la base d'un nombre prédéterminé d'autres clés partielles (TS_{z,i}).

32. Disposition selon l'une des revendications 18 à 31, **caractérisé en ce que** le moyen affecté à l'utilisateur comprend
des moyens de détection de clés partielles (TS_{x,i}, TS_{y,i}, TS_{z,i}), et
des moyens de calcul et/ou de vérification d'une fonction d'affectation commune à au moins un groupe de clés partielles (TS_{x,i}, TS_{y,i}, TS_{z,i}).

33. Dispositif selon l'une des revendications 18 à 32, **caractérisé en ce que** le moyen affecté à l'utilisateur comprend des moyens de décryptage d'une information E cryptée par cryptographie visuelle, sur la base d'au moins une clé partielle (TS_{x,i}, TS_{y,i}) et/ou sur la base d'au moins une clé partielle (TS_{x,i}, TS_{y,i}) reconstruite.

34. Dispositif selon l'une des revendications 18 à 33 dans lequel les moyens peuvent être reliés par l'intermédiaire d'un réseau de communication.

35. Dispositif selon l'une des revendications 18 à 34, **caractérisé en ce que** le moyen côté sortie et/ou le moyen côté utilisateur comprennent un microprocesseur et/ou un logiciel conçu pour la mise en oeuvre du procédé selon l'une des revendications précédentes 1 à 17.

36. Dispositif selon l'une des revendications 18 à 35, **caractérisé en ce qu'**un moyen de génération d'une clé partielle est conçu pour générer la clé partielle (TS_{x,i}, TS_{y,i}, TS_{z,i}) des pages d'un ouvrage imprimé.

37. Dispositif selon la revendication 36, **caractérisé en ce qu'**un moyen de génération d'une clé partielle est conçu pour générer la clé partielle (TS_{x,i}, TS_{y,i}, TS_{z,i}) sur un support transparent, notamment sur un film.

38. Ouvrage imprimable ou imprimé comportant au moins une partie qui présente au moins une clé partielle (TS_{x,i}, TS_{y,i}, TS_{z,i}) d'une information E cryptée par cryptographie visuelle, l'information comprenant un contenu susceptible de comprendre du texte et/ou une représentation graphique, la clé partielle étant générée selon un procédé selon l'une des revendications 1 à 17.

39. Ouvrage selon la revendication 38, **caractérisé en ce qu'**au moins la partie présentant au moins une clé partielle (TS_{x,i}, TS_{y,i}, TS_{z,i}) d'une information E cryptée par cryptographie visuelle, est imprimée sur un support transparent.

40. Logiciel de mise en oeuvre avec code programme enregistré sur au moins un support de données lisible par ordinateur, notamment adapté à la mise en oeuvre du procédé selon l'une des revendications 18 à 37, le logiciel de mise en oeuvre comportant des étapes de code programme pour la mise en oeuvre des étapes de procédé du procédé selon l'une des revendications 1 à 17, lorsque le code programme du support de données est lu par un ordinateur.

41. Utilisation d'un dispositif selon l'une des revendications 18 à 37 pour la mise en oeuvre d'un procédé selon l'une des revendications 1 à 17.

42. Utilisation selon la revendication 41 pour la fabrication d'un ouvrage imprimé.
